# FASCICULE DE BREVET EUROPEEN

(11) **EP 2 144 791 B1**
(45) Date de publication et mention de la délivrance du brevet: **20.07.2011**
(21) Numéro de dépôt: 08788029.0
(22) Date de dépôt: 20.03.2008
(51) Int. Cl.: B60R 21/215

(54) **ELÉMENT D'HABILLAGE DE L'INTÉRIEUR D'UN VÉHICULE AUTOMOBILE**
MONTAGEELEMENT FÜR DAS INNERE EINES AUTOMOBILS
FITTING MEMBER FOR THE INSIDE OF AN AUTOMOBILE

(30) Priorité: 16.05.2007 FR 0755112
(43) Date de publication de la demande: 20.01.2010
(73) Titulaire: Faurecia Interieur Industrie, 92000 Nanterre (FR)
(72) Inventeur: BEAUPERE, Stéphane, F-60540 Bornel (FR); VASILESCU, Claudiu, F-60114 Meru (FR)
(74) Mandataire: Blot, Philippe Robert Emile
(86) Numéro de dépôt international: PCT/FR2008/050482
(87) Numéro de publication internationale: WO 2008/142309

(56) Documents cités:
- EP-A- 1 468 878
- US-A- 5 195 773
- US-A1- 2003 020 202
- US-B1- 6 337 461

## Description

La présente invention concerne en général un élément d'habillage de l'intérieur d'un véhicule automobile.

Plus précisément, l'invention concerne un élément d'habillage de l'intérieur d'un véhicule automobile du type ayant une face visible et une face invisible opposée à la face visible, l'élément d'habillage comprenant une ligne d'affaiblissement réalisée sur la face invisible et définissant une zone de portillon destinée à s'ouvrir sous la pression du déploiement d'un sac gonflable de sécurité lors d'un choc subi par le véhicule automobile, la ligne d'affaiblissement comprenant une rainure de longueur totale déterminée délimitée par un fond et au moins une nervure transversale en saillie par rapport au fond et fermant au moins partiellement la rainure, l'élément d'habillage ayant une épaisseur de matière entre la face visible et le fond comprise entre des bornes minimum et maximum prédéterminées sur la plus grande partie de la longueur totale de la rainure.

Un tel élément d'habillage est connu de JP-2006-315115 qui décrit que la rainure est divisée en plusieurs segments de longueurs identiques par des nervures disposées à intervalles réguliers le long de ladite rainure.

Un tel élément d'habillage ne répond pas à l'exigence imposée par les constructeurs de véhicule automobile selon laquelle la ligne d'affaiblissement doit rester invisible pour les passagers du véhicule, en dépit du vieillissement de l'élément d'habillage dû notamment à l'exposition solaire, et également en dépit des étapes de fabrication suivantes de l'élément d'habillage, telles que par exemple la fixation de cet élément d'habillage sur la structure du véhicule automobile et/ou l'assemblage par soudage vibration d'éléments complémentaires sur l'élément d'habillage, notamment le canal de tir assurant la liaison entre le module du sac gonflable et l'élément d'habillage.

US 6 337 461 B1 décrit un élément d'habillage selon le préambule de la revendication 1. L'élément d'habillage du document japonais ne répond pas non plus à l'exigence selon laquelle la zone de portillon doit permettre un déploiement satisfaisant du sac gonflable à basse température, typiquement à - 30°C.

Dans ce contexte, l'invention vise à proposer un élément d'habillage qui réponde à la fois aux exigences d'aspect des constructeurs automobiles, et qui permette un déploiement satisfaisant du sac gonflable à toute température entre +85°C et -30°C.

A cette fin, l'invention porte sur un élément d'habillage selon la revendication 1.

L'élément d'habillage peut également présenter une ou plusieurs des caractéristiques ci-dessous, considérées individuellement ou selon toutes les combinaisons techniquement possibles :
- la rainure comprend une pluralité de zones de moindre résistance présentant des longueurs respectives, la somme desdites longueurs respectives étant comprise entre 2% et 15% de la longueur totale de la rainure ;
- l'épaisseur de matière entre le fond et la face visible dans la ou chaque zone de moindre résistance est comprise entre 0,2 mm et 0,5 mm ;
- lesdites bornes minimum et maximum d'épaisseur de matière sont respectivement 0,5 mm et 1 mm ;
- la ligne d'affaiblissement comprend une pluralité de nervures présentant des longueurs respectives, la somme desdites longueurs respectives étant comprise entre 5% et 20% de la longueur totale de la rainure ;
- la ou chaque nervure s'étend sur toute la largeur de la rainure et présente une longueur comprise entre 0,9 mm et 1,6 mm ;
- la ou chaque nervure s'étend à partir du fond sur une hauteur comprise entre 50% et 100% de la profondeur de la rainure prise au niveau de ladite nervure ;
- la ligne d'affaiblissement comprend une pluralité de nervures réparties le long de la rainure, deux nervures voisines présentant entre elles un écartement compris entre 5 mm et 50 mm ; et
- la ou chaque zone de moindre résistance est dépourvue de nervure.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective d'une planche de bord de véhicule automobile, comprenant un élément d'habillage conforme à l'invention;
- la figure 2 est une représentation simplifiée de la ligne d'affaiblissement de l'élément d'habillage de la figure 1, seule une partie des nervures 15 étant représentée ; - la figure 3 est une vue en coupe d'un tronçon de la ligne d'affaiblissement
- la figure 3 est une vue en coupe d'un tronçon de la ligne d'affaiblissement de la figure 2, prise selon l'incidence des flèches 3 ;
- la figure 4 est une vue en coupe transversale de la ligne d'affaiblissement de la figure 3, prise selon l'incidence des flèches 4 ; et
- les figures 5 et 6 sont des représentations simplifiées de deux variantes de réalisation de la ligne d'affaiblissement de la figure 2, définissant des zones de portillon comportant respectivement 2 et 4 volets.

Dans la description qui va suivre, l'avant, l'arrière, la droite et la gauche s'entendent en référence au sens de déplacement normal de véhicule automobile.

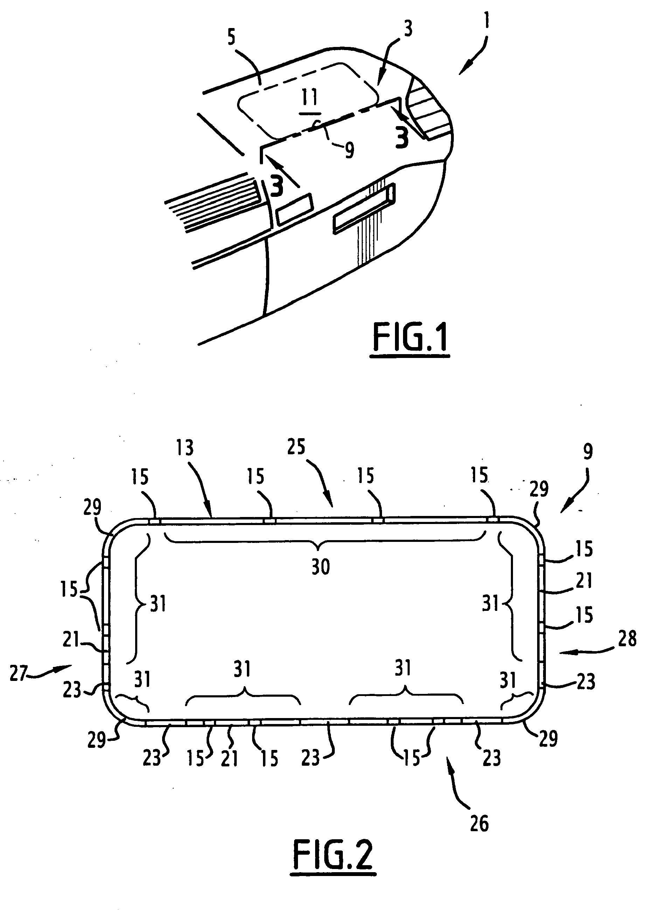

La planche de bord 1 représentée partiellement sur la figure 1 comporte un élément d'habillage 3, une cavité (non représentée) ménagée sous l'élément d'habillage 3, et un sac gonflable de sécurité (non représenté) disposé dans la cavité.

L'élément d'habillage 3 est un panneau en matière plastique présentant une face visible 5 constituant la face supérieure de la planche de bord, et une face invisible 7 opposée à la face visible et tournée vers la cavité.

L'élément d'habillage 3 comprend une ligne d'affaiblissement 9 réalisée sur la face invisible 7 et définissant une zone de portillon 11 destinée à s'ouvrir sous la pression du déploiement du sac gonflable de sécurité lors d'un choc subi par le véhicule automobile.

Dans ce but, la ligne d'affaiblissement 9 et la zone de portillon 11 sont disposées de manière à fermer l'ouverture par laquelle le sac gonflable est susceptible de sortir de la cavité quand il se gonfle.

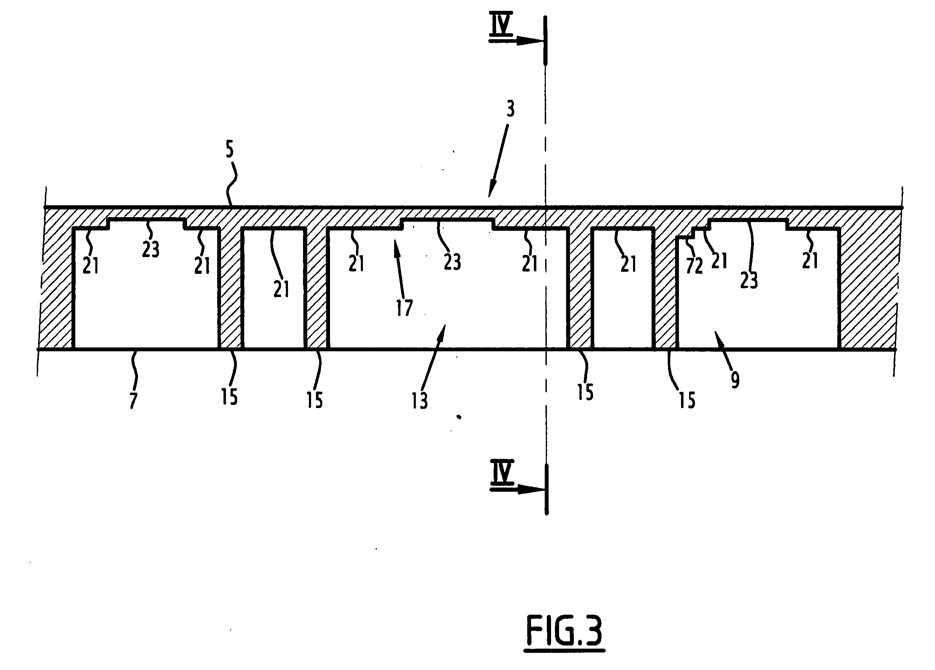

Comme le montrent les figures 2 et 3, la ligne d'affaiblissement 9 comprend une rainure 13 creusée dans la face invisible 7 de l'élément d'habillage, et une pluralité de nervures 15. La nervure 13 présente un contour fermé. Dans l'exemple de réalisation illustré sur les figures 1 et 2, elle présente un contour général sensiblement rectangulaire à coins arrondis. La rainure 13 est délimitée par un fond 17 et deux bords latéraux 19 opposés. Elle est ouverte sur la face invisible 7.

La rainure 13 comprend des zones de résistance normale 21 et des zones de moindre résistance 23.

Dans les zones de résistance normale, l'élément d'habillage a une épaisseur de matière entre la face visible 5 et le fond 17 de la rainure comprise entre des bornes minimum et maximum valant respectivement 0,5 mm et 1 mm. De préférence, ces bornes valent 0,6 mm et 0,8 mm. Typiquement, cette épaisseur vaut 0,7 mm.

Dans les zones 23 de moindre résistance, l'épaisseur de matière entre la face visible 5 et le fond 17 de la rainure est inférieure à la borne minimum ci-dessus, c'est-à-dire inférieure à 0,5 mm. De préférence, l'épaisseur de matière dans chaque zone de moindre résistance est comprise entre 0,2 et 0,5 mm. Typiquement, cette épaisseur vaut 0,3 mm.

La rainure 13 comprend typiquement plusieurs zones 23 de moindre résistance. Ces zones 23 présentent des longueurs respectives dont la somme est comprise entre 2 % et 15 % de la longueur totale de la rainure 13. De préférence, ladite somme est comprise entre 4 % et 8 % de la longueur totale de la rainure, et vaut typiquement 6 % de la longueur totale de la rainure.

La ligne d'affaiblissement 9 comprend généralement un grand nombre de nervures 15 permettant de renforcer la liaison entre la zone de portillon 11 et le reste de l'élément d'habillage. Les nervures ne sont pas toutes représentées sur les figures 2 et 3. Chaque nervure 15 s'étend en saillie à partir du fond 17 de la rainure. Elle s'étend sur toute la largeur de la rainure 13, d'un bord latéral 19 à l'autre bord latéral 19. Chaque nervure 15 s'étend, à partir du fond 17, sur une hauteur comprise entre 50 % et 100 % de la profondeur de la rainure prise au niveau de ladite nervure. De préférence, chaque nervure s'étend sur une hauteur comprise entre 80 % et 100 % de la profondeur de la rainure, et s'étend typiquement sur une hauteur de 100 % de la profondeur de la rainure.

Chaque nervure 15 s'étend sur une longueur comprise entre 0,9 mm et 1,6 mm de la largeur de la rainure prise au niveau de ladite nervure. De préférence, chaque nervure s'étend sur une longueur de 1,2 mm. En dessous de 0,9 mm, les nervures ne sont pas assez rigides et au-dessus de 1,6 mm, elles ne permettent plus une rupture contrôlée.

Les nervures 15 présentent des longueurs respectives dont la somme est comprise entre 5 % et 20 % de la longueur totale de la rainure, de préférence entre 7 % et 15 % de la longueur totale de la rainure, et qui vaut typiquement 10 % de la longueur totale de la rainure.

Par ailleurs, les nervures sont réparties le long de la rainure 13, de telle sorte que deux nervures voisines présentent entre elles un écartement compris entre 5 mm et 50 mm, de préférence entre 10 mm et 30 mm, et valant typiquement 10 mm.

Bien entendu, aucune nervure 15 n'est disposée dans les zones de moindre résistance 23 de la nervure.

Comme le montre la figure 2, les zones 21 de résistance moyenne de la rainure sont constituées par toutes les zones de ladite rainure 13 qui ne sont occupées ni par une nervure 15 ni par une zone de moindre résistance 23.

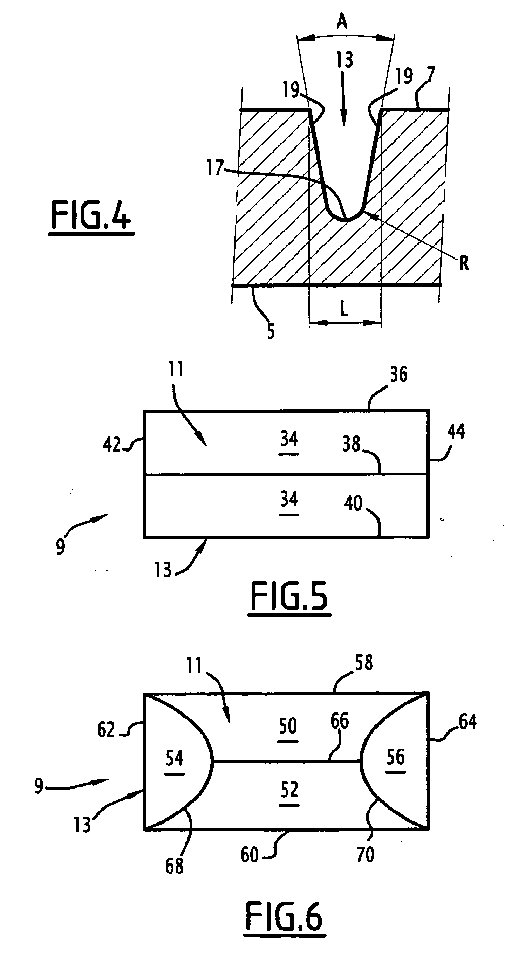

Comme le montre la figure 4, la rainure 13 présente une section transversale en coin. Les deux parois transversales 19 forment un angle A l'une par rapport à l'autre et convergent vers le fond 17. L'angle A est compris entre 20 et 45° et vaut typiquement 35°. La largeur L de la rainure 13 au niveau de la face invisible 7, c'est-à-dire l'écartement entre les parois 19, est comprise entre 1 et 3 mm et vaut typiquement 1, 5 mm. Le fond 17, considéré en section transversale, est incurvé. Son rayon de courbure R est typiquement compris entre 0, 25 mm et 1 mm et vaut typiquement 0, 5 mm. Les parois 19 se raccordent de manière sensiblement tangentielle au fond 17.

Comme le montre la figure 2, la rainure comporte quatre côtés sensiblement rectilignes, respectivement 25, 26, 27 et 28 reliés par quatre portions arrondies 29. Les côtés 25 et 26 sont tournés respectivement vers l'avant et l'arrière du véhicule. Les côtés 27 et 28 sont tournés respectivement vers la gauche et la droite du véhicule.

La rainure 13 comporte cinq zones de moindre résistance 23, dans lesquelles des déchirures sont susceptibles d'être initiées sous la pression du déploiement du sac gonflable de sécurité, un segment charnière 30 destiné à former une charnière autour de laquelle le portillon pivote lorsqu'il s'ouvre sous la pression du déploiement du sac gonflable, et plusieurs segments 31 de propagation des déchirures initiées dans les zones de moindre résistance.

Le segment charnière 30 est constitué essentiellement du côté 25 de la rainure. Il est dépourvu de zones de moindre résistance. Il porte, en revanche, plusieurs nervures 15. Deux de ces nervures 15 sont disposées aux deux extrémités du segment 30.

Trois des zones de moindre résistance 23 sont situées sur le côté 26. Une des zones 23 est située au centre du côté 26. Les deux autres zones 23 sont situées aux deux extrémités opposées du côté 26.

Les deux dernières zones 23 sont situées, l'une, sur le côté gauche 27 et l'une sur le côté droit 28, aux extrémités de ces côtés les plus proches du côté arrière 26.

Les segments de propagation 31 sont constitués par toutes les parties de la rainure 13 s'étendant entre deux zones de moindre résistance 23 voisines, et également par les parties de la rainure 13 reliant les zones de moindre résistance 23 aux segments charnières 30. Les segments de propagation 31 sont constitués essentiellement de zones de résistance normale 21 et portent des nervures 15.

On va maintenant décrire plusieurs exemples d'élément d'habillage conformes à l'invention. Dans chacun des exemples, l'élément d'habillage présente entre ses faces visibles et invisibles une épaisseur sensiblement constante en dehors de la rainure, valant environ 3,5 mm. Le tableau ci-dessous indique, pour chaque exemple de réalisation, le nombre de zones de moindre résistance 23, le nombre de nervures 15 et le nombre de zones de résistance normale 21. Il indique également les longueurs cumulées des zones 21, des zones 23 et des nervures 15, en proportion de la longueur totale de la rainure 13. Il indique encore pour les zones 21 et 23, l'épaisseur de matière entre la face visible et le fond de la rainure, indiquée en mm. Pour les nervures 15, l'épaisseur indiquée correspond à l'épaisseur de matière entre la face visible 5 et le bord libre de la nervure 15.

Le tableau indique en outre l'écart minimum et l'écart maximum entre deux nervures 15 consécutives pour chaque exemple.

**Tableau 1**

| | **Exemple 1** | | | **Exemple 2** | | | **Exemple 3** | | | **Exemple 4** | | |
|---|---|---|---|---|---|---|---|---|---|---|---|---|
| | Zones 21 | Zones 23 | Nervures 15 | Zones 21 | Zones 23 | Nervures 15 | Zones 21 | Zones 23 | Nervures 15 | Zones 21 | Zones 23 | Nervures 15 |
| Nombre | 5 | 44 | 40 | 5 | 44 | 40 | 3 | 37 | 35 | 5 | 49 | 45 |
| Longueur cumulée | 6% | 84% | 10% | 8% | 80% | 12% | 4% | 89% | 7% | 4% | 88% | 8% |
| Epaisseur | 0,2 | 0,8 | 3,5 | 0,2 | 0,8 | 3,5 | 0,3 | 0,6 | 3 | 0,3 | 0,7 | 3,5 |
| Ecart mln-max | | | 10-40 | | | 10-40 | | | 15-35 | | | 8-35 |

Dans tous les exemples, la rainure 13 possède la forme sensiblement rectangulaire illustrée sur la figure 2. Le segment charnière 30 et les zones de moindre résistance sont disposés, dans ces exemples, comme sur la figure 2.

Les caractéristiques principales de trois exemples de réalisation non conformes à l'invention, qui ne permettent pas d'atteindre soit l'objectif d'invisibilité de la ligne d'affaiblissement, soit l'objectif de permettre un déploiement satisfaisant du sac gonflable, sont indiquées dans le tableau ci-dessous.

**Tableau 2**

| | **Exemple 5** | | | **Exemple 6** | | | **Exemple 7** | | |
|---|---|---|---|---|---|---|---|---|---|
| | Zones 21 | Zones 23 | Nervures 15 | Zones 21 | Zones 23 | Nervures 15 | Zones 21 | Zones 23 | Nervures 15 |
| Nombre | 10 | 49 | 40 | 5 | 44 | 40 | 5 | 24 | 20 |
| Longueur cumulée | 6% | 74% | 20% | 15% | 75% | 10% | 6% | 74% | 20% |
| Epaisseur | 0,5 | 1,5 | 3,5 | 0,3 | 0,8 | 2 | 0,3 | 0,7 | 3 |
| Ecart min-max | | | 5-20 | | | 10-40 | | | 20-50 |

Les grandeurs indiquées dans ce tableau pour chaque exemple sont les mêmes que dans le tableau précédent. Dans l'exemple 5, l'épaisseur de matière au niveau des zones de moindre résistance et des zones de résistance normale est accrue. Par ailleurs, les nervures 15 représentent 20 % de la longueur totale de la rainure, ce qui est une valeur élevée. Enfin, les zones de moindre résistance 23 sont chacune très courte, puisque la rainure compte dix zones 23 dont les longueurs cumulées représentent seulement 6 % de la longueur de la rainure. La combinaison de ces trois facteurs fait que la liaison entre la zone de portillon 11 et le reste de l'élément d'habillage 3 est très rigide, de telle sorte que la zone de portillon ne s'ouvre pas de manière satisfaisante sous la pression de déploiement du sac gonflable.

Dans l'exemple 6, les nervures 15 sont de hauteur réduite. De plus, les zones de moindre résistance 23 sont chacune de grande longueur. En effet, la rainure 13 compte cinq zones 23 dont les longueurs cumulées représentent 15 % de la longueur totale de la rainure. La combinaison de ces deux facteurs fait que la liaison entre la zone de portillon 11 et le reste de l'élément d'habillage est peu rigide. De ce fait, la ligne d'affaiblissement 9 peut devenir apparente quand l'élément d'habillage est soumis à des contraintes mécaniques, par exemple lors de la fixation de l'élément d'habillage sur la planche de bord, lors de la fixation de la planche de bord sur le véhicule, ou quand l'élément d'habillage est soumis à une exposition prolongée au soleil.

Dans l'exemple 7, la rainure 13 porte des nervures 15 qui sont très espacées les unes des autres, mais qui sont chacune très rigides puisque la longueur cumulée des nervures 15 représente 20 % de la longueur totale de la rainure. Du fait de l'espacement important entre les nervures 15, la ligne d'affaiblissement peut devenir visible localement, entre les nervures 15, quand l'élément d'habillage est soumis à des contraintes mécaniques importantes, notamment dans les situations indiquées au paragraphe précédent. De plus, du fait que les nervures 15 présentent des longueurs respectives cumulées importantes, la zone de portillon 11 a tendance à ne pas s'ouvrir de manière satisfaisante sous la pression de déploiement du sac gonflable.

L'élément d'habillage 3 est typiquement une pièce moulée, réalisée en polypropylène ou en un copolymère de polypropylène et d'EPDM. Si nécessaire, ce matériau peut comprendre une charge minérale, par exemple des fibres de verre. La ligne d'affaiblissement 9 est réalisée après moulage et refroidissement de l'élément d'habillage. Elle peut être réalisée par fraisage, comme décrit par exemple dans JP-2006-315115, ou à l'aide d'une lame chaude faisant fondre la matière plastique. Ces procédés sont connus et ne seront pas décrits ici.

Le processus d'ouverture de la zone de portillon 11 lors du déploiement du sac gonflable de sécurité va maintenant être décrit.

Lorsque le véhicule automobile subit un choc, un capteur détecte ce choc et commande le gonflage du sac, notamment grâce à des moyens pyrotechniques. Dans une première phase, le sac en se gonflant remplit la cavité et vient porter contre la zone de portillon 11, sur la face invisible 7 de l'élément d'habillage. Il exerce sur la zone de portillon 11 une pression qui va en s'accroissant au fur et à mesure que le sac gonfle. Quand la pression dépasse une limite déterminée, une ou plusieurs des zones de moindre résistance 23 de la rainure se déchire. Ces déchirures se propagent d'une zone de moindre résistance 23 à l'autre à travers les segments de propagation 31. Elles se propagent également à travers les segments de propagation 31 jusqu'au segment charnière 30. Au cours de la propagation à travers les segments 31, les zones d'épaisseur normale 21 et les nervures 15 se déchirent. On comprend donc que la déchirure naît au niveau du côté 26 de la rainure, sensiblement à l'opposé du segment charnière 30, et se propage à travers les côtés gauche et droit 27 et 28 jusqu'à cette charnière. Une fois la rainure déchirée sur trois côtés, à savoir les côtés 26, 27 et 28, la zone de portillon 11 peut pivoter autour du segment charnière 30 libérant ainsi le sac gonflable et permettant l'expansion de celui-ci dans l'habitacle du véhicule automobile.

L'élément d'habillage décrit ci-dessus présente de multiples avantages.

Du fait que la ligne d'affaiblissement comporte une rainure et au moins une nervure de renforcement de la rainure, la rainure présentant des zones de résistance normale et au moins une zone de moindre résistance, il est possible de rendre la ligne d'affaiblissement invisible pour les passagers du véhicule, tout en garantissant une ouverture satisfaisante de la zone de portillon sous la pression du déploiement du sac gonflable.

Les caractéristiques des zones de résistance normale, des zones de moindre résistance, et des nervures doivent être déterminées au cas par cas, en fonction de l'épaisseur de l'élément d'habillage, du matériau constituant cet élément d'habillage, et des caractéristiques du sac gonflable.

Un premier paramètre à déterminer est l'épaisseur de matériau au niveau des zones de moindre résistance. Cette épaisseur doit permettre une initialisation adéquate de la déchirure de la rainure sous la pression du sac gonflable. Il a ainsi été déterminé qu'une épaisseur comprise entre 0,2 mm et 0,5 mm est satisfaisante à cet égard.

De plus, le nombre et la position des zones de moindre résistance doivent permettre d'initialiser la déchirure sensiblement à l'opposé du segment charnière, et ensuite de propager cette déchirure sur trois côtés de la rainure. Le nombre et la disposition des zones de moindre résistance doivent être choisis de manière à éviter la propagation de la déchirure à travers le segment charnière. Une disposition telle qu'illustrée sur la figure 2 respecte ces différentes exigences.

L'épaisseur de matière dans les zones de résistance normale, le nombre, l'espacement, la hauteur et la longueur des nervures sont choisis pour arriver à un compromis entre :
- la rigidité, sur toute la périphérie de la rainure, de la liaison entre la zone de portillon et le reste de l'élément d'habillage ;
- la propagation de la déchirure entre les zones de moindre résistance, et de ces zones de moindre résistance jusqu'au segment charnière.

En utilisant les critères indiqués dans la description, l'homme du métier peut fixer les différents paramètres ci-dessus, dans tous les cas, sans faire d'effort inventif.

On obtient ainsi un élément d'habillage extrêmement simple et économique à produire comportant une zone de portillon délimitée par une ligne d'affaiblissement invisible, et permettant un déploiement satisfaisant du sac gonflable de sécurité. La liaison entre la zone de portillon et le reste de l'élément d'habillage est telle qu'il n'y a aucun risque que ladite zone de portillon devienne projectile en cas de déploiement du sac gonflable.

Par ailleurs, le profil de la rainure et les caractéristiques des nervures sont relativement indépendantes du matériau constituant l'élément d'habillage, dans une certaine limite.

De plus, la détermination du profil de la rainure et des caractéristiques des nervures est facile à réaliser, quelles que soient les caractéristiques du sac gonflable et celles de l'élément d'habillage, par calcul et/ou par des essais.

L'élément d'habillage peut présenter de multiples variantes.

La rainure peut présenter des formes différentes de celles de la revendication 2, par exemple les formes illustrées sur les figures 4 et 5.

Sur la figure 4, la zone de portillon 11 comprend deux volets 34 rectangulaires. La rainure 13 comporte trois lignes 36, 38 et 40, représentées horizontales sur la figure 4, parallèles entre elles, et deux lignes 42 et 44 représentées verticales sur la figure 4, reliant les extrémités des lignes horizontales. Les zones de moindre résistance sont concentrées dans la ligne horizontale centrale 38. Les lignes horizontales supérieure et inférieure 36 et 40 constituent les segments charnières. Les lignes verticales 42 et 44 correspondent principalement à des segments de propagation.

Sur la figure 5, la zone de portillon est divisée en quatre volets 50, 52, 54 et 56. La rainure 13 comprend une ligne périphérique rectangulaire comportant deux côtés 58 et 60 représentés horizontaux sur la figure 5 et deux côtés 62 et 64 représentés verticaux sur la figure 5 reliant les extrémités des côtés horizontaux. La rainure comporte également une ligne centrale 66 représentée horizontale, sur la figure 5, située au centre de la ligne périphérique rectangulaire. La rainure comporte encore deux lignes arquées 68 et 70 reliant chacune une extrémité de la ligne centrale 66 à deux angles de la ligne périphérique rectangulaire. Les segments de moindre résistance sont concentrés dans la ligne centrale 66. Les côtés 58, 60, 62 et 64 constituent des segments charnières pour les quatre volets. Les lignes arquées 68 et 70 correspondent principalement à des segments de propagation.

La face visible 5 de l'élément d'habillage peut être libre ou au contraire peut être peinte ou recouverte d'un décor.

Le décor peut comporter lui aussi une ligne d'affaiblissement, placée en coïncidence avec celle de l'élément d'habillage.

L'élément d'habillage peut être réalisé en d'autres matières plastiques que celles citées plus haut.

La ligne d'affaiblissement peut être ménagée sur la face invisible par d'autres techniques de fabrication que celles décrites plus haut. Elles peuvent être par exemple venues de moulage.

L'élément d'habillage peut ne pas être intégré dans la planche de bord du véhicule automobile, mais par exemple être disposé au centre du volant. Elle peut également être également disposée sur les ouvrants du véhicule, et, plus généralement, à tout endroit de l'intérieur du véhicule automobile où est placé un sac gonflable de sécurité.

Les zones de résistance normales de la rainure peuvent comporter partout la même épaisseur. Alternativement, elles peuvent comporter localement des épaisseurs supérieures (zone 72 de la figure 3), ou inférieures dans la limite des bornes maximum et minimum définies ci-dessus. Ceci permet d'ajuster localement la résistance de la liaison entre la zone de portillon et le reste de l'élément d'habillage.

De même, les nervures peuvent présenter partout la même hauteur, la même longueur, le même espacement. Inversement, certaines des nervures 15 peuvent présenter des hauteurs, des longueurs ou des espacements différents des autres nervures.

De même, les zones de moindre résistance peuvent présenter toutes la même épaisseur de matière. Inversement, certaines des zones de moindre résistance peuvent présenter des épaisseurs de matière différente, dans la limite de la fourchette précisée plus haut.

La rainure peut présenter partout la même section, ou comporter des portions de sections différentes les unes des autres.

La rainure peut présenter une section différente de celle illustrée sur la figure 4. Les parois 19 peuvent être parallèles l'une à l'autre. Le fond 17 peut être plat, ou au contraire en V.

## Revendications

1. Elément d'habillage de l'intérieur d'un véhicule automobile, l'élément d'habillage (3) ayant une face visible (5) et une face invisible (7) opposée à la face visible (5), l'élément d'habillage (13) comprenant une ligne d'affaiblissement (9) réalisée sur la face invisible (7) et définissant une zone de portillon (11) destinée à s'ouvrir sous la pression du déploiement d'un sac gonflable de sécurité lors d'un choc subi par le véhicule automobile, la ligne d'affaiblissement (9) comprenant une rainure (13) de longueur totale déterminée délimitée par un fond (17) et au moins une nervure (15) transversale en saillie par rapport au fond (17) et fermant au moins partiellement la rainure (13), l'élément d'habillage (3) ayant une épaisseur de matière entre la face visible (5) et le fond (17) comprise entre des bornes minimum et maximum prédéterminées sur la plus grande partie de la longueur totale de la rainure (13), **caractérisée en ce que** la rainure (13) comprend au moins une zone de moindre résistance (23) dans laquelle l'épaisseur de matière entre la face visible (5) et le fond (17) est inférieure à ladite borne minimum, **en ce que** la rainure (13) présente au moins un segment charnière (30) dépourvu de zone de moindre résistance (23), destiné à former une charnière autour de laquelle au moins une partie de la zone de portillon (11) pivote sous la pression du déploiement du sac gonflable de sécurité, et **en ce que** la rainure (13) présente au moins un segment de propagation (31) dépourvu de zone de moindre résistance (23), s'étendant entre la ou une zone de moindre résistance (23) et le ou un segment charnière (30) et reliant la ou une zone de moindre résistance (23) au ou à un segment charnière (30), le segment de propagation (31) étant apte à propager une déchirure initiée dans ladite zone de moindre résistance (23) sous la pression du déploiement du sac gonflable de sécurité.

2. Elément d'habillage selon la revendication 1, **caractérisé en ce que** la rainure (13) comprend une pluralité de zones de moindre résistance (23) présentant des longueurs respectives, la somme desdites longueurs respectives étant comprise entre 2% et 15% de la longueur totale de la rainure (13).

3. Elément d'habillage selon la revendication 1 ou 2, **caractérisé en ce que** l'épaisseur de matière entre le fond (17) et la face visible (5) dans la ou chaque zone de moindre résistance (23) est comprise entre 0,2 mm et 0,5 mm.

4. Elément d'habillage selon l'une quelconque des revendications 1 à 3, **caractérisé en ce que** lesdites bornes minimum et maximum d'épaisseur de matière sont respectivement 0,5 mm et 1 mm.

5. Elément d'habillage selon l'une quelconque des revendications 1 à 4, **caractérisé en ce** la ligne d'affaiblissement (9) comprend une pluralité de nervures (15) présentant des longueurs respectives, la somme desdites longueurs respectives étant comprise entre 5% et 20% de la longueur totale de la rainure (13).

6. Elément d'habillage selon l'une quelconque des revendications 1 à 5, **caractérisé en ce que** la ou chaque nervure (15) s'étend sur toute la largeur de la rainure (13) et présente une longueur comprise entre 0,9 mm et 1,6 mm.

7. Elément d'habillage selon l'une quelconque des revendications 1 à 6, **caractérisé en ce que** la ou chaque nervure (15) s'étend à partir du fond (17) sur une hauteur comprise entre 50% et 100% de la profondeur de la rainure (13) prise au niveau de ladite nervure (15).

8. Elément d'habillage selon l'une quelconque des revendications 1 à 7, **caractérisé en ce que** la ligne d'affaiblissement (9) comprend une pluralité de nervures (15) réparties le long de la rainure (13), deux nervures (15) voisines présentant entre elles un écartement compris entre 5 mm et 50 mm.

9. Elément d'habillage selon l'une quelconque des revendications précédentes, **caractérisé en ce que** la ou chaque zone de moindre résistance (23) est dépourvue de nervure (15).

## Claims

1. Covering element for the interior of a motor vehicle, the covering element (3) having a visible face (5) and an invisible face (7) opposite the visible face (5), the covering element (3) comprising a weakening line (9) which is formed on the invisible face (7) and defines a gate zone (11) which is to open under the pressure of the deployment of the airbag when the motor vehicle is subjected to an impact, the weakening line (9) comprising a groove (13) which has a given total length and is delimited by a bottom (17) and at least one transverse rib (15) which projects relative to the bottom (17) and closes the groove (13) at least partially, the covering element (3) having a thickness of material between the visible face (5) and the bottom (17) which is between predetermined minimum and maximum limits over most of the total length of the groove (13), **characterised in that** the groove (13) comprises at least one zone of lesser strength (23) in which the thickness of material between the visible face (5) and the bottom (17) is less than said minimum limit, **in that** the groove (13) has at least one hinge segment (30) which does not have a zone of lesser strength (23) and which is to form a hinge about which at least part of the gate zone (11) pivots under the pressure of the deployment of the airbag, and **in that** the groove (13) has at least one propagation segment (31) which does not have a zone of lesser strength (23), which extends between the or a zone of lesser strength (23) and the or a hinge segment (30) and which connects the or a zone of lesser strength (23) to the or a hinge segment (30), the propagation segment (31) being capable of propagating a tear initiated in said zone of lesser strength (23) under the pressure of the deployment of the airbag.

2. Covering element according to claim 1, **characterised in that** the groove (13) comprises a plurality of zones of lesser strength (23) having respective lengths, the sum of said respective lengths being from 2% to 15% of the total length of the groove (13).

3. Covering element according to claim 1 or 2, **characterised in that** the thickness of material between the bottom (17) and the visible face (5) in the or each zone of lesser strength (23) is from 0.2 mm to 0.5 mm.

4. Covering element according to any one of claims 1 to 3, **characterised in that** said minimum and maximum limits of the thickness of material are 0.5 mm and 1 mm, respectively.

5. Covering element according to any one of claims 1 to 4, **characterised in that** the weakening line (9) comprises a plurality of ribs (15) having respective lengths, the sum of said respective lengths being from 5% to 20% of the total length of the groove (13).

6. Covering element according to any one of claims 1 to 5, **characterised in that** the or each rib (15) extends over the whole of the width of the groove (13) and has a length of from 0.9 mm to 1.6 mm.

7. Covering element according to any one of claims 1 to 6, **characterised in that** the or each rib (15) extends from the bottom (17) over a height of from 50% to 100% of the depth of the groove (13), taken in the region of said rib (15).

8. Covering element according to any one of claims 1 to 7, **characterised in that** the weakening line (9) comprises a plurality of ribs (15) distributed along the groove (13), two adjacent ribs (15) having between them a spacing of from 5 mm to 50 mm.

9. Covering element according to any one of the preceding claims, **characterised in that** the or each zone of lesser strength (23) does not have a rib (15).

## Patentansprüche

1. Element zur Verkleidung des Innenraums eines Kraftfahrzeuges, wobei das Verkleidungselement (3) eine Sichtfläche (5) und eine nicht sichtbare Fläche (7), die entgegengesetzt zur Sichtfläche (5) liegt, aufweist und eine Schwächungslinie (9) umfasst, die an der nicht sichtbaren Fläche (7) realisiert ist und eine Zugangszone (11) begrenzt, die dazu dient, sich unter der Wirkung des Drucks des Entfaltens eines aufblasbaren Airbags bei einem vom Kraftfahrzeug aufzunehmenden Stoß zu öffnen, wobei die Schwächungslinie (9) eine Nut (13) mit einer bestimmten
Gesamtlänge, die durch einen Nutgrund (17) begrenzt ist, und mindestens einen in Bezug auf den Nutgrund (17) hervorspringenden Quersteg (15) aufweist, der mindestens teilweise die Nut (13) verschließt, wobei das Verkleidungselement (3) eine Materialdicke zwischen der Sichtfläche (5) und dem Nutgrund (17) aufweist, die zwischen einer minimalen und einer maximalen Grenze liegt, die über den größten Bereich der Gesamtlänge der Nut (13) vorbestimmt sind, **dadurch gekennzeichnet, dass** die Nut (13) mindestens eine Zone (23) verringerten Widerstands aufweist, in der die Materialdicke zwischen der Sichtfläche (5) und dem Nutgrund (17) geringer ist als die minimale Grenze, dass die Nut (13) mindestens ein Scharniersegment (30) ohne Zone (23) verringerten Widerstands aufweist, das dazu dient, ein Scharnier zu bilden, um das herum mindestens ein Teil der Zugangszone (11) unter der Wirkung des Drucks des Entfaltens des Airbags schwenkt, und dass die Nut (13) mindestens ein Ausbreitungssegment (31) ohne eine Zone (23) verringerten Widerstands aufweist, das sich zwischen der oder einer Zone (23) verringerten Widerstands und dem oder einem Scharniersegment (30) erstreckt und die oder eine Zone (23) verringerten Widerstands mit dem oder einem Scharniersegment (30) verbindet, wobei das Ausbreitungssegment (31) geeignet ist, einen Riss weiterzuleiten, der in der Zone (23) verringerten Widerstands unter der Wirkung des Drucks des Entfaltens des Airbags hervorgerufen wurde.

2. Verkleidungselement nach Anspruch 1, **dadurch gekennzeichnet, dass** die Nut (13) eine Mehrzahl von Zonen (23) verringerten Widerstands umfasst, die jeweilige Längen aufweisen, wobei die Summe der jeweiligen Längen zwischen 2% und 15% der Gesamtlänge der Nut (13) liegt.

3. Verkleidungselement nach Anspruch 1 oder 2, **dadurch gekennzeichnet, dass** die Materialdicke zwischen dem Nutgrund (17) und der Sichtfläche (5) in der oder jeder Zone (23) verringerten Widerstands zwischen 0,2 mm und 0,5 mm liegt.

4. Verkleidungselement nach einem beliebigen der Ansprüche 1 bis 3, **dadurch gekennzeichnet, dass** die minimale und die maximale Grenze der Materialdicke jeweils 0,5 mm und 1 mm sind.

5. Verkleidungselement nach einem beliebigen der Ansprüche 1 bis 4, **dadurch gekennzeichnet, dass** die Schwächungslinie 9 eine Mehrzahl von Stegen mit jeweiligen Längen umfasst, wobei die Summe dieser jeweiligen Längen zwischen 5% und 20% der Gesamtlänge der Nut (13) liegt.

6. Verkleidungselement nach einem beliebigen der Ansprüche 1 bis 5, **dadurch gekennzeichnet, dass** der oder jeder Steg (15) sich über die gesamte Breite der Nut (13) erstreckt und eine Länge zwischen 0,9 mm und 1,6 mm aufweist.

7. Verkleidungselement nach einem beliebigen der Ansprüche 1 bis 6, **dadurch gekennzeichnet, dass** der oder jeder Steg (15) sich von dem Nutgrund (17) über eine Höhe zwischen 50% und 100% der Tiefe der Nut (13), genommen an dem Steg (15), erstreckt.

8. Verkleidungselement nach einem beliebigen der Ansprüche 1 bis 7, **dadurch gekennzeichnet, dass** die Schwächungslinie (9) eine Mehrzahl von Stegen (15) umfasst, die längs der Nut (13) verteilt sind, wobei zwei benachbarte Stege (15) zueinander sich einen Abstand zwischen 5 mm und 50 mm aufweisen.

9. Verkleidungselement nach einem beliebigen der vorhergehenden Ansprüche, **dadurch gekennzeichnet, dass** die oder jede Zone (23) verringerten Widerstands ohne Steg (15) ausgebildet ist.
